# EUROPÄISCHE PATENTSCHRIFT

(11) **EP 1 198 739 B1**
(45) Veröffentlichungstag und Bekanntmachung des Hinweises auf die Patenterteilung: **02.04.2003**
(21) Anmeldenummer: 00945933.0
(22) Anmeldetag: 19.07.2000
(51) Int. Cl.: G05B 23/02

(54) **DIAGNOSEVERFAHREN UND DIAGNOSESYSTEM FÜR EINE TECHNISCHE ANLAGE**
METHOD AND SYSTEM FOR DIAGNOSING A TECHNICAL INSTALLATION
PROCEDE ET SYSTEME DE DIAGNOSTIC POUR UNE INSTALLATION TECHNIQUE

(30) Priorität: 28.07.1999 EP 99114790
(43) Veröffentlichungstag der Anmeldung: 24.04.2002
(73) Patentinhaber: SIEMENS AKTIENGESELLSCHAFT, 80333 München (DE)
(72) Erfinder: ADAM, Gottfried, D-53819 Neunkirchen-Seelscheid (DE)
(86) Internationale Anmeldenummer: EP0006898
(87) Internationale Veröffentlichungsnummer: WO01009694

(56) Entgegenhaltungen:
- EP-A- 0 413 512
- EP-A- 0 424 869
- WO-A-89/03087
- WO-A-96/20439
- US-A- 4 552 718
- US-A- 5 369 756

## Beschreibung

Die Erfindung betrifft ein Diagnoseverfahren für eine technische Anlage zur Ermittlung der Ursache eines Störereignisses. Die Erfindung betrifft auch ein entsprechendes Diagnosesystem für eine technische Anlage.

In dem Artikel "Online-Turbinendiagnose spart Brennstoff und senkt Instandhaltungskosten" von W. Zörner, Siemens Power Journal, Heft 1 1993, Seiten 14-17, ist ein Diagnosesystem für eine Turbinenanlage beschrieben. Das Diagnosesystem ist modular aufgebaut. Der Aufbau orientiert sich an den Fünktionsgruppen von Turbinenanlagen. Durch eine umfangreiche Datenerfassung und Aufbereitung wird eine hohe Informationsdichte erzielt. Es werden nicht nur einzelne Meßwerte angezeigt und Abweichungen von einem Sollzustand erkannt, sondern Online-Diagnosen über den Anlagenzustand durchgeführt. Sich anbahnende Veränderungen werden durch eine ständige Überwachung der Meßwerte relevanter Komponenten und Betriebszustände der Maschinen frühzeitig erkannt. Die Diagnose wird ereignisorientiert eingeleitet, d. h. automatisch dann, wenn Meßwerte ihren zulässigen Streubereich - weit vor einer Gefahrenmeldung - überschreiten. Sie kann darüber hinaus zeitabhängig oder für eine manuelle Auswertung eines Problemfeldes angeregt werden. Ein Expertensystem der zentralen Diagnose meldet im Online-Betrieb automatisch jede Unregelmäßigkeit. Die Module sind dabei, entsprechend ihrer jeweiligen Funktion, mehr oder weniger algorhitmisch oder auch je nach Komplexität wissensbasiert orientiert. Ein Charakteristikum des Systems ist die Verarbeitung von unsicherem Wissen. Hier kommen verschiedene Formalismen zum Einsatz, die von mathematisch orientierten probabilistischen Modellen bis zur Fuzzylogic reichen. Den Diagnosen werden Bewertungen zugeordnet (Konfidenzfaktoren), die eine Aussage über den Grad des Vertrauens in die gezogene Schlußfolgerung machen. Für die Bewertung werden alle Diagnosen nach fallenden Konfidenzfaktoren sortiert und ausgegeben. Ebenso wird eine Liste der Diagnosen erstellt, die mit hoher Wahrscheinlichkeit ausgeschlossen werden können.

Eine Beschreibung des gleichen Diagnosesystems gibt der Artikel "Einsatz eines Diagnosesystems zur Optimierung des Betriebs von Turbinenanlagen" von W. Zörner, VDI-Berichte 1092, VDI-Verlag Düsseldorf 1993. Dort wird am Beispiel eines Kondensators einer Dampfturbinenanlage beschrieben, wie aus Meßwerten von Meßgrößen wie Kondensatordruck, Generatorleistung oder Luftleckagemassenstrom über logische Verknüpfungen ein Diagnoseergebnis gewonnen wird.

Bei komplexen Zusammenhängen werden auf logischen Verknüpfungen beruhende Diagnosen unübersichtlich und sind dann auf ihre logische Widerspruchsfreiheit hin nicht mehr verifizierbar. Auch die Pflege so verknüpfter Regelwerke bei Anlagenänderungen ist sehr aufwendig. Auch andere Diagnosewerkzeuge wie neuronale Netze oder Fuzzy-Logic sind sehr aufwendig und führen nicht immer zu eindeutigen Aussagen.

Aufgabe der Erfindung ist die Angabe eines Diagnoseverfahrens für eine technische Anlage zur Ermittlung der Ursache eines Störereignisses, bei dem auch bei einem sehr komplexen Aufbau der technischen Anlage eine ausreichend schnelle und sichere Aussage über die Ursache getroffen werden kann. Weitere Aufgabe der Erfindung ist die Angabe eines entsprechenden Diagnosesystems.

Erfindungsgemäß wird die auf ein Diagnoseverfahren gerichtete Aufgabe gelöst durch ein Diagnoseverfahren für eine technische Anlage zur Ermittlung der Ursache eines durch eine Stör-Zustandsgröße beschriebenen Störereignisses, bei dem ein über Zustandsgrößen definierter Betriebszustand der Anlage durch eine Bestimmung von jeweils eine Zustandsgröße charakterisierender Diagnoseparameter ermittelt wird;
ein aus Hierarchieebenen, numeriert mit Hn, aufgebauten Abhängigkeitsbaum erstellt wird, der zumindest einen Teil der Diagnoseparameter enthält, wobei
eine erste Hierarchieebene einen die Stör-Zustandsgröße charakterisierenden Stör-Diagnoseparameter enthält,
eine auf die erste Hierarchieebene folgende zweite Hirarchieebene Diagnoseparameter enthält, die Zustandsgrößen definieren, die unmittelbar auf die Stör-Zustandsgröße einwirken,
eine auf die Hierarchieebene Hn folgende Hierarchieebene Hn+1 Diagnoseparameter enthält, die Zustandsgrößen definieren, die unmittelbar auf die Zustandsgrößen einwirken, die durch die Diagnoseparameter der Hierarchieebene Hn charakterisiert werden;
ausgehend vom Stör-Diagnoseparameter ein Fehlerweg im Abhängigkeitsbaum dadurch ermittelt wird, daß entsprechend der Größe oder einer Veränderungsrichtung eines Diagnoseparameters eine Hierarchieebene Hn ein verantwortlicher Diagnoseparampeter einer Hierarchieebene Hn+1 identifiziert wird;
aus einem so identifizierten verantwortlichen Diagnoseparameter einer letzten Hierarchieebene auf die Ursache des Störereignisses geschlossen wird.

In diesen Diagnoseverfahren wird also die Ursache des Störereignisses über einen Hierarchieebenen aufweisenden Abhängigkeitsbaum ermittelt. Jede Hierarchieebene enthält Diagnoseparameter, die gemessene oder berechnete Zustandsgrößen der technischen Anlage chrarakterisieren. Dabei ist einer Hierarchieebene eine andere Hierarchieebene vorgeschaltet, die Diagnoseparameter enthält, auf die die Zustandsgrößen der nachgeschalteten Hierarchieebene (beschrieben durch deren jeweilige Diagnoseparameter) einwirken. Dabei können parallele Hierarchieebenen auftreten, d. h. einem Diagnoseparameter einer Hierarchieebene Hn ist eine Hierarchieebene Hn+1 nachgeschaltet mit Diagnoseparametern von Zustandsgrößen die unmittelbar auf diesen Diagnoseparameter (bzw. dessen Zustandsgröße) einwirken. Einem anderen Diagnoseparameter der Hierarchieebene Hn kann eine andere, zur ersten Hierarchieebene Hn+1 parallele Hierarchieebene Hn+1 zugeordnet sein, die einen anderen Satz von auf die Zustandsgröße des Diagnoseparameters der Hierarchieebene Hn einwirkende Zustandsgrößen (bzw. deren'Diagnoseparameter) enthält. Mit einer solchen baumartigen Struktur werden also die technischen Abhängigkeiten in der technischen Anlage übersichtlich und eindeutig zum Ausdruck gebracht. In einem weiteren Schritt wird die Größe oder Veränderungsrichtung des in der ersten Hierarchieebene enthaltenen Stör-Diagnoseparameters betrachtet und daraus jener Diagnoseparameter oder jene Diagnoseparameter der zweiten Hierarchieebene als verantwortliche Diagnoseparameter für die Größe oder Veränderungsrichtung des Stör-Diagnoseparameters identifiziert. Iterativ werden nachfolgend die verantwortlichen Diagnoseparameter der weiteren Hierarchieebenen sukzessive identifiziert. Durch Identifizierung der verantwortlichen Diagnoseparameter einer letzten Hierarchieebene ist mit hinreichender Sicherheit auf die Ursache des Störereignisses schließbar. Diese Vorgegensweise für die Diagnose ist ausreichend schnell durchführbar, so daß Folgeschäden des Störereignisses durch eine entsprechende Reaktion auf die Ursache vermieden werden können. Weiterhin ist das Diagnoseverfahren so übersichtlich und flexibel, daß auch Änderungen an der technischen Anlage in einfacher Weise in das Diagnosverfahren einbezogen werden können.

Vorzugsweise wird jedem Diagnoseparameter eine Hierarchieebene Hn+1 für jeden Diagnoseparameter einer vorgeschalteten Hierarchieebene Hn eine steigende, fallende oder konstant bleibende Änderungsrichtung abhängig von einer vorgegebenen Änderungsrichtung des jeweiligen Diagnoseparameters der Hierarchieebene Hn zugewiesen, wobei der Fehlerweg anhand einer Übereinstimmung gemessener Änderungsrichtungen der Diagnoseparameter mit den zugewiesenen Änderungsrichtungen ermittelt wird. Jeder Diagnoseparameter kann also drei Änderungseigenschaften annehmen: fallend, steigend oder konstant bleibend. Wird für einen Diagnoseparameter eine dieser Änderungseigenschaften vorgegeben, so bestimmen sich die dann angenommenen Änderungseigenschaften der nachfolgenden Hierarchieebene Hn+1 gemäß einer bekannten technischen Abhängigkeit (gewonnen z.B. durch ein Expertensystem). Jeder Diagnoseparameter weist also über seine Änderungseigenschaft eine definierte Verknüpfung mit den Diagnoseparametern der nachfolgenden Hierarchieebene auf. Indem nun die gemessenen Änderungsrichtungen der Diagnoseparameter mit den zugewiesenen Änderungsrichtungen verglichen werden, können schnell und einfach die verantwortlichen Diagnoseparameter und damit der Fehlerweg gewonnen werden.

Ein großer Vorteil ist hier die rekursive Analyse, d.h. es müssen immer nur die Meßwerte von zwei aufeinander folgenden Hierarchieebenen betrachtet werden, um zur nächsten Hierarchieebene zu kommen, unabhängig davon, in welcher Tiefe des Abhängigkeitsbaumes man sich befindet. Zudem können unterschiedliche Experten unabhängig voneinander an der Erstellung des Abhängigkeitsbaumes und der Aufstellung der zugewiesenen Änderungsrichtungen arbeiten. Die Bewertung der Zuverlässigkeit von Diagnoseaussagen ist zudem in einfacher und nachvollziehbarer Weise möglich. Geht man davon aus, daß der Abhängigkeitsbaum und die zugewiesenen Änderungsrichtungen für bestimmte Betriebszustände (z.B. Lastbetrieb einer Turbine) wohl definiert sind, ist die Widerspruchshäufigkeit, d.h. die Anzahl der Prozeßvariablen, welche sich nach Eintritt des unerwünschten Zustandes nicht in die vorgegebene Richtung ändern, ein Maß für die Glaubwürdigkeit der Diagnose. In einem Wichtungsalgorithmus für die Unschärfe können die Anzahl der mit den zugewiesenen Änderungsrichtungen konformen Prozeßvariablen, Wichtungsfaktoren sowie die zeitliche Dauer des Störungsprozesses einbezogen werden.

Bevorzugt ist die technische Anlage einer Turbinenanlage. Weiter bevorzugt ist die technische Anlage eine Gasturbinenanlage, eine Dampfturbinenanlage oder eine kombinierte Gasund Dampfturbinenanlage. Gerade bei einer solchen Turbinenanlage ist das Diagnoseverfahren vorteilhaft einsetzbar, da durch sequentielle, durch die Führung des jeweiligen turbinentreibenden Mediums bestimmte Prozesse eine einfache Aufstellung des Abhängigkeitsbaumes ermöglicht wird. Zudem ist es gerade bei Turbinenanlagen unbedingt notwendig, ein schnelles und zuverlässiges Diagnosesystem zur Früherkennung der Ursachen eines Störereignisses zur Verfügung zu haben.

Vorzugsweise erfolgt die Ursachenermittlung durch Nutzung eines Wide Area Network, insbesondere dem Internet. Dies ermöglicht eine Ferndiagnose der technischen Anlage. Z. B. kann eine Diagnose in einem Kraftwerk auch durch den u. U. weit entfernt operierenden Kraftwerkshersteller erfolgen.

Erfindungsgemäß wird die auf ein Diagnosesystem gerichtete Aufgabe gelöst durch eine Angabe eines Diagnosesystems für eine technische Anlage, bei dem eine Ursache eines durch eine Stör-Zustandsgröße beschriebenen Störereignisses durch folgende Schritte ermittelbar ist:
Ermittlung eines über Zustandsgrößen definierten Betriebszustandes der Anlage durch eine Bestimmung von jeweils eine Zustandsgröße charakterisierender Diagnoseparameter;
Erstellung eines aus Hierarchieebenen, numeriert mit Hn, aufgebauten Abhängigkeitsbaumes, der zumindest einen Teil der Diagnoseparameter enthält, wobei
eine erste Hierarchieebene eine die Stör-Zustandsgröße charakterisierenden Diagnoseparameter enthält,
eine auf die erste Hierarchieebene folgende zweite Hierarchieebene Diagnoseparameter enthält, die Zustandsgrößen definieren, die unmittelbar auf die Stör-Zustandsgröße einwirken,
eine auf die Hierarchieebene Hn folgende Hierarchieebene Hn+1 Diagnoseparameter enthält, die Zustandsgrößen definieren, die unmittelbar auf die Zustandgrößen einwirken, die durch die Diagnoseparameter der Hierarchieebene Hn charakterisiert werden;

Ermittlung eines Fehlerweges im Abhängigkeitsbaum ausgehend vom Stör-Diagnoseparameter dadurch, daß entsprechend der Größe oder einer Änderungsrichtung eines Diagnoseparameters einer Hierarchieebene Hn ein verantwortlicher Diagnoseparameter einer Hierarchieebene Hn+1 identifiziert wird; Bestimmung der Ursache aus einem so identifizierten verantwortlichen Diagnoseparameter einer letzten Hierarchieebene.

Die Vorteile eines solchen Diagnosesystems ergeben sich entsprechend den obigen Ausführungen zu den Vorteilen des Diagnoseverfahrens.

Ausführungsbeispiele der Erfindung werden anhand der Zeichnung näher erläutert. Es zeigen teilweise schematisch und nicht maßstäblich:
- FIG 1: eine kombinierte Gas- und Dampfturbinenanlage,
- FIG 2: einen Austrittsbereich eïner Gasturbine,
- FIG 3: einen Querschnitt durch einen Austrittsdiffusor einer Gasturbine mit Temperatursensoren,
- FIG 4: eine Temperaturverteilung in einem Abgasstrom einer Gasturbine,
- FIG 5: ein zeitlicher Verlauf einer Differenz zwischen einer Abgastemperatur und einem Sollwert für Abgas einer Gasturbine,
- FIG 6: einen Abhängigkeitsbaum A,
- FIG 7: zugewiesene Veränderungsrichtungen für Diagnoseparameter im Abhängigkeitsbaum und
- FIG 8: die Ermittlung eines Fehlerweges im Abhängigkeitsbaum.

Gleiche Bezugszeichen haben in den verschiedenen Figuren die gleiche Bedeutung.

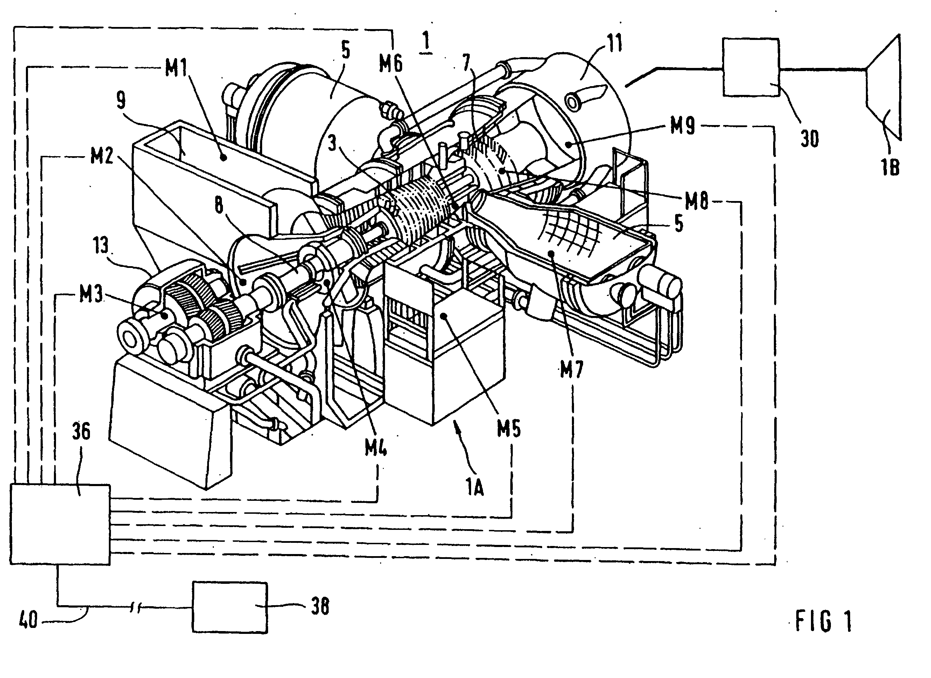

FIG 1 zeigt eine als kombinierte Gas- und Dampfturbinenanlage ausgeführte technische Anlage 1. Eine Gasturbinenanlage 1A ist aus einem Verdichter 3, zwei Silobrennkammern 5 und einem Turbinenteil 7 aufgebaut. Über ein Ansaughaus 9 saugt der Verdichter 3 Umgebungsluft an und verdichtet diese. Die verdichtete Luft wird den Brennkammern 5 zugeführt und dort mit Brennstoff verbrannt. das so erzeugte heiße Abgas treibt den Turbinenteil 7 und damit eine Turbinenwelle 8 an, die über ein Getriebe 13 an einen nicht dargestellten Generator zur Stromerzeugung gekoppelt ist. Das über einen Austrittsdiffusor 11 austretende heiße Abgas wird einem Abhitzekessel 30 zur Dampferzeugung zugeleitet. Der erzeugte Dampf wird einer Dampfturbinenanlage 1B 32 zugeleitet.

Zur Überwachung des Betriebszustandes der Turbinenanlage 1 sind an zahlreichen Stellen Meßinstrumente zur Messung von Zustandsgrößen angeordnet. Bei der Gasturbinenanlage 1A sind dies z. B.:
- M1: Messung des Außendruckes, einer Druckdifferenz zu einem Filter, der Umgebungstemperatur und der Luftfeuchtigkeit im Ansaughaus,
- M2: Messung der Temperatur, des Druckes und der Stellung der ersten Leitschaufelreihe am Verdichtereintritt,
- M3: Messung von Schwingungen, Temperatur, Ölqualität, Füllzu- stand und Druck im Getriebe,
- M4: Messung von Schwingungen, Temperatur und Druck in einem Lager,
- M5: Messung von Temperatur, Druck, Füllzustand und Ölqualität im Schmierölsystem,
- M6: Messung der Temperatur und des Druckes am Verdichteraustritt,
- M7: Messung von Druck und Temperatur und Brennstoffdurchsatz im Brenner bzw. in der Brennkammer,
- M8: Messung der Temperatur am Turbinenaustritt
- M9: Schadstoffmessung, z. B. NOx, O₂, CO im Abgaskanal.

Die so bestimmten Zustandsgrößen M werden einer Übermittlungseinrichtung 36 zugeleitet. Über ein Wide Area Network, wie dem Internet oder über eine Telefonleitung; werden die Zustandsgrößen M charakterisierende Diagnoseparameter D einem Diagnosesystem 38 zugeleitet.

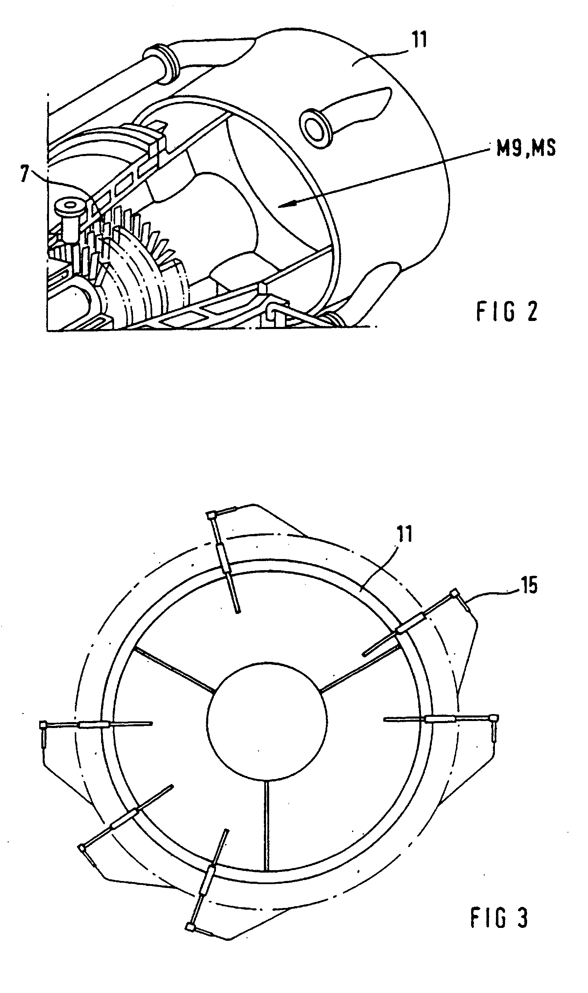

FIG 2 zeigt einen Austrittsbereich mit Austrittsdiffusor 11 der Gasturbinenanlage 1A aus FIG 1.

In FIG 3 ist dazu ein Querschnitt durch diesen Austrittsdiffusor 11 dargestellt, wobei Temperatursensoren 15 am Austrittsdiffusor 11 zur Messung einer Abgastemperaturverteilung angeordnet sind.

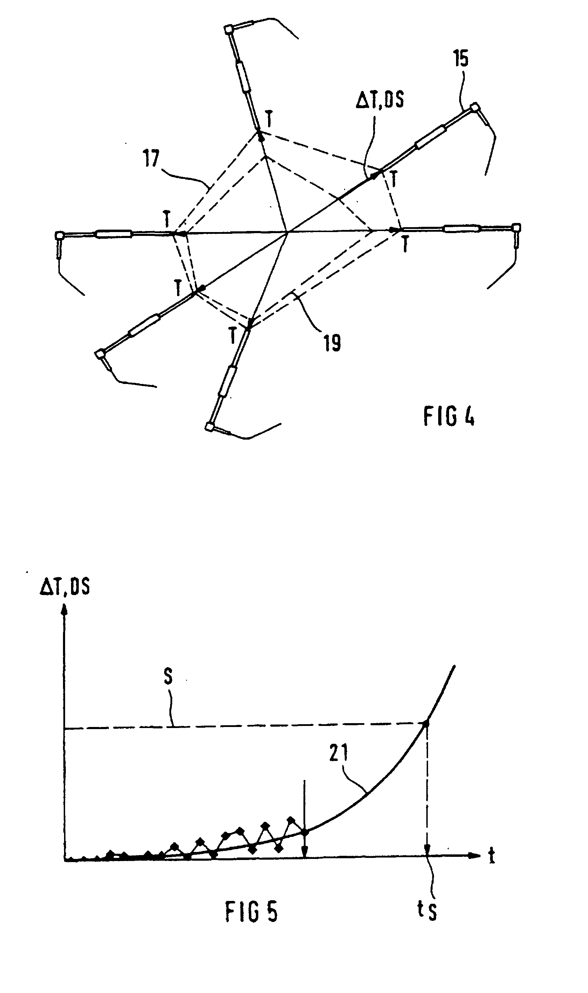

In FIG 4 ist ein über die Temperatursensoren 15 gewonnene Temperaturverteilung 19, des heißen Abgases dargestellt. Eine Sollverteilung 17 für die Temperaturverteilung ist ebenfalls dargestellt. Ein größter Abweichungswert zwischen der Sollverteilung 17 und der Temperaturverteilung 19, eingezeichnet als δt, ergibt bei Überschreiten eines Grenzwertes einen Stör-Diagnoseparameter DS.

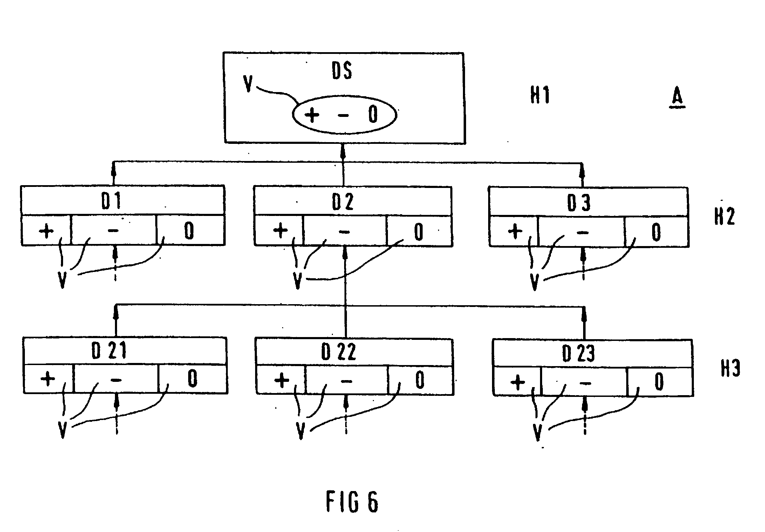

FIG 5 zeigt einens zeitlichen Verlauf der Temperaturdifferenz δt und die ermittelte Zeit TS, bei der aus einer Extrapolation ein Überschreiten des Grenzwertes S erfolgt. Durch diese Extrapolation kann bereits frühzeitig ein Störereignis charakterisiert durch den Stör-Diagnoseparameter DS ausgemacht werden.

In FIG 6 ist ein Abhängigkeitsbaum A dargestellt. Eine erste Hierarchieebene H1 enthält einen Stör-Diagnoseparameter DS. Dieser Stör-Diagnoseparameter DS kann eine Änderungsrichtung V annehmen, die entweder steigend (dargestellt mit +), fallend (dargestellt mit -) oder konstant (dargestellt mit 0) ist. Auf die erste Hierarchieebene H1 folgt eine zweite Hierarchieebene H2 die Diagnoseparameter D1, D2, D3 enthält. Die Diagnoseparameter D1, D2, D3 charakterisieren Zustandsgrößen, die unmittelbar auf die vom Stör-Diagnoseparameter DS charakterisierte Zustandsgröße einwirken. Jeder der Diagnoseparameter D1, D2, D3 der zweiten Hierarchieebene H2 kann eine steigende, fallende oder gleichbleibende Änderungsrichtung aufweisen. Diese sind wiederum mit +, - und 0 dargestellt.

Auf die zweite Hierarchieebene H2 folgt eine dritte Hierarchieebene H3. Für den Diagnoseparameter D2 der zweiten Hierarchieebene H2 ist diese dritte Hierarchieebene H3 gebildet durch die Diagnoseparameter D21, D22 und D23. Die Diagnoseparameter D21, D22 und D23 charakterisieren Zustandsgrößen, die unmittelbar auf die vom Diagnoseparameter D2 charakterisierte Zustandsgröße einwirken. Auch die Diagnoseparameter D21, D22 und D23 weisen jeweils eine Änderungsrichtung V auf, die steigend, fallend oder gleichbleibend sein kann. Die Diagnoseparameter D1 und D3 der zweiten Hierarchieebene H2 können jeweils eine eigene nachfolgend geschaltete dritte Hierarchieebene H3 aufweisen, wobei diese jeweiligen dritten Hierarchieebenen H3 Diagnoseparametern zu Zustandsgrößen aufweisen, die wiederum unmittelbar auf die jeweils von den Diagnoseparametern D1 und D3 charakterisierten Zustandsgrößen einwirken.

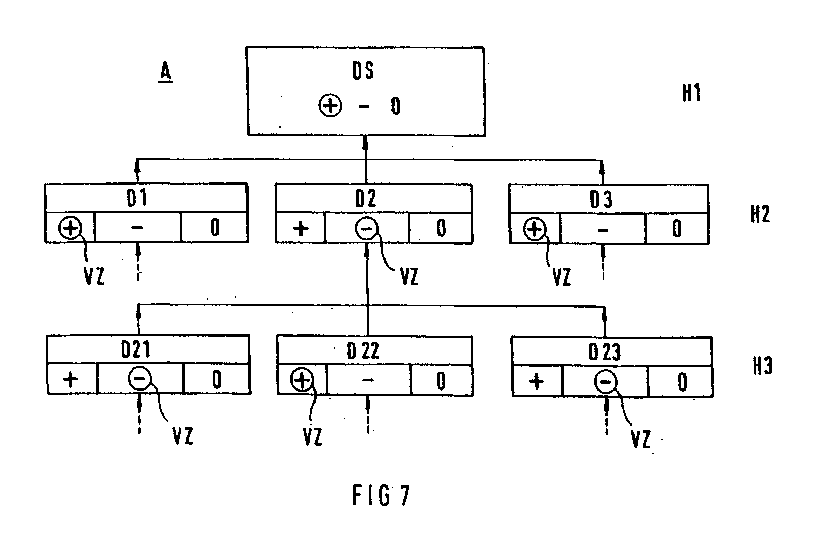

Nach der Aufstellung des Abhängigkeitsbaumes A, der die technologischen Abhängigkeiten der gemessenen Zustandsgrößen beschreibt, werden abhängig von den Änderungsrichtungen V Verknüpfungen zwischen den Diagnoseparametern D eingeführt. Dies wird näher anhand von FIG 7 erläutert.

FIG 7 zeigt den Abhängigkeitsbaum A der FIG 6, wobei als ein Beispiel eine steigende Änderungsrichtung für den Stör-Diagnoseparameter DS vorgegeben ist, dargestellt durch eine Umkreisung des Pluszeichens. Eine steigende Änderungsrichtung für den Stör-Diagnoseparameter DS ist durch definierte, zugewiesene Änderungsrichtungen VZ der Diagnoseparameter D1, D2 und D3 der zweiten Hierarchieebene H2 bewirkbar. Mithilfe vorhandenen Wissens über die Zustandsgrößenabhängigkeiten ist im gezeigten Beispiel dem Diagnoseparameter D1 eine positive Änderungsgeschwindigkeit VZ zuzuweisen. Der Diagnoseparameter D2 weist demgegenüber eine negative zugewiesene Änderungsrichtung VZ auf. Die zugewiesene Änderungsrichtung VZ für den Diagnoseparameter D3 ist wiederum positiv. Mit anderen Worten: die Diagnoseparameter D1 und D3 müßten steigen um auch. ein Ansteigen des Stör-Diagnoseparameters DS zu bewirken. Demgegenüber müßte der Diagnoseparameter D2 für ein Ansteigen des Stör-Diagnoseparameters DS sinken. Die Diagnoseparameter D21, D22 und D23 werden nun mit dem Diagnoseparameter 2 bezüglich der zugewiesenen Änderungsrichtungen VZ in gleicher Weise verknüpft, wie der Stör-Diagnoseparameter DS mit den Diagniseparametern D1, D2 und D3. Für einen sinkenden Diagnoseparameter D2 ist somit ein sinkender Diagnoseparameter D21, ein steigender Diagnoseparameter D22 und ein sinkender Diagnoseparameter D23 zuzuweisen. Der Abhängigkeitsbaum A ist nunmehr durch ein Expertenwissen um Verknüpfungen angereichert, die die Abhängigkeiten der Änderungsrichtungen der Diagnoseparameter die aufeinanderfolgenden Hierarchieebenen H widerspiegelt.

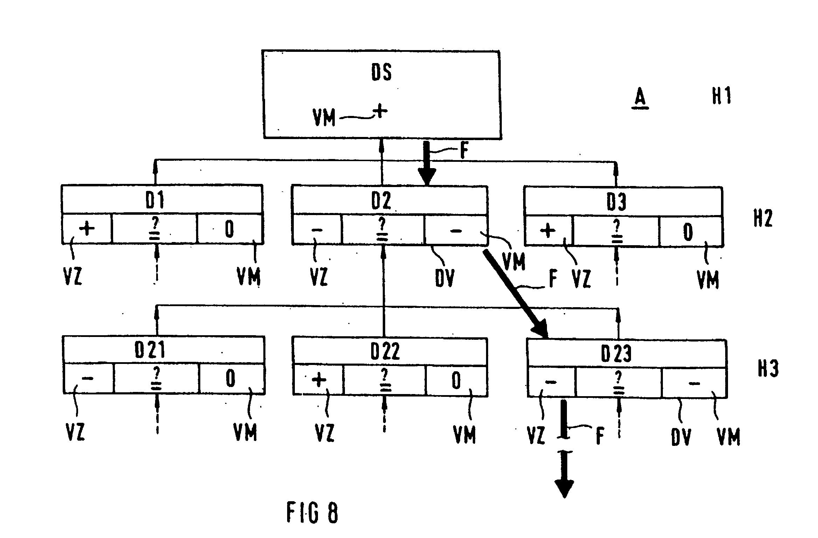

In FIG 8 ist dargestellt, wie aus dem Abhängigkeitsbaum der FIG 7 ein Fehlerweg F ermittelt wird, der letztlich auf die Ursache des durch den Stör-Diagnoseparameter DS charakterisierten Störereignisses führt. Das Störereignis ist beispielsweise durch einen steigenden Stör-Diagnoseparameter gekennzeichnet. Ein steigender Stör-Diagnoseparameter kann durch ein Anstieg des Diagnoseparameter D1, ein Anstieg des Diagnoseparameters D3 oder ein Sinken des Diagnoseparameters D2 verursacht sein. Es werden nunmehr gemessene Änderungsrichtungen VM der jeweiligen Diagnoseparameter D1, D2, D3 mit den vorher einem steigenden Stör-Diagnoseparameter DS zugewiesenen Änderungsrichtungen VZ der jeweiligen Diagnoseparameter D1, D2, D3 verglichen. Bei einer Übereinstimmung der zugewiesenen Änderungsrichtung VZ mit der gemessenen Änderungsrichtung VM führt zu einer Identifizierung des Diagnoseparameters als ein für den Anstieg des Stör-Diagnoseparameters verantwortlicher Diagnoseparameter. In diesem Fall ist D2 ein verantwortlicher Diagnoseparameter DV. Entsprechend wird der Diagnoseparameter D23 in der Hierarchieebene H3 als ein verantwortlicher Diagnoseparameter DV identifiziert. Die Verbindung der verantwortlichen Diagnoseparameter, angefangen vom Stör-Diagnoseparameter DS ergibt den Fehlerweg F im Abhängigkeitsbaum A. Der Fehlerweg F führt schließlich zu einer letzten, hier nicht näher dargestellten Hierarchieebene H, bei der aus dem dort identifizierten verantwortlichen Diagnoseparameter DV auf die Ursache des Störereignisses geschlossen werden kann.

Ein mögliches Störereignis bei einer Gasturbinenanlage könnte z. B. der Anstieg der Turbinenaustrittstemperatur sein. Der Stör-Diagnoseparameter DS ist also die Turbinenaustrittstemperatur mit einer steigenden Änderungsrichtung VM. In der ersten Hierarchieebene sind als unmittelbar auf die Turbinenaustrittstemperatur einwirkende Zustandsgrößen deren beschreibende Diagnoseparameter Verdichteraustrittstemperatur D1, Verdichtermassenstrom D2 und Brennstoffmassenstrom D3 enthalten. Für einen Anstieg der Turbinenaustrittstemperatur, wie im Störereignis beobachtet, müßte die Verdichteraustrittstemperatur steigen. Der Diagnoseparameter D1 hat also eine für dieses Störereignis steigende zugewiesene Änderungsrichtung VZ. Der Verdichtermassenstrom, d. h. der Diagnoseparameter D2 hat eine sinkende zugewiesene Veränderungsrichtung VZ. Der Brennstoffmassenstrom weist für das Störereignis keine zugewiesene Veränderungsrichtung VZ auf, da der Brennstoffmassenstrom gegenüber dem stationären Betriebszustand nicht gesteigert werden kann. Wird nun beobachtet, daß die Verdichteraustrittstemperatur konstant ist, während der Verdichtermassenstrom sinkt, so ist der Verdichtermassenstrom, d. h. der Diagnoseparameter D2 als ein verantwortlicher Diagnoseparameter DV für das Störereignis identifiziert. In der dritten Hierarchieebene sind als auf den Diagnoseparameter D2 einwirkende Diagnoseparameter die Drehzahl der Turbine D21, die Verdichtereintrittstemperatur D22 und der Verdichtereintrittsdruck D23 enthalten. Beobachtet man eine konstante Drehzahl und eine konstante Verdichtereintrittstemperatur während der Verdichtereintrittsdruck sinkt, so ist durch den Vergleich diese Beobachtung mit den jeweils zugewiesenen Veränderungsrichtungen VZ der Diagnoseparameter D23, also der Verdichtereintrittsdruck als verantwortlicher Diagnoseparameter DV identifiziert. Gegebenenfalls sind weitere Hierarchieebenen entsprechend zu durchlaufen, um letztlich die Ursache der Erhöhung der Turbinenaustrittstemperatur zu ermitteln.

Durch das vorstehend beschriebene Diagnoseverfahren bzw. das Diagnosesystem ist ein flexibles, zuverlässiges und einfaches Werkzeug zur Ermittlung der Ursache eines Störereignisses in einer technischen Anlage verwirklicht.

## Patentansprüche

1. Diagnoseverfahren für eine technische Anlage (1) zur Ermittlung der Ursache eines durch eine Stör-Zustandsgröße (MS) beschriebenen Störereignisses, bei dem
• ein über Zustandsgrößen (M) definierter Betriebszustand der Anlage durch eine Bestimmung von jeweils eine Zustandsgröße (M) charakterisierender Diagnoseparametern (D) ermittelt wird;
• ein aus Hierarchieebenen (H), numeriert mit Hn, aufgebauter Abhängigkeitsbaum (A) erstellt wird, der zumindest einen Teil der Diagnoseparameter (D) enthält, wobei
• eine erste Hierarchieebene (H1) einen die Stör-Zustandsgröße (MS) charakterisierenden Stör-Diagnoseparameter (DS) enthält,
• eine auf die erste Hierarchieebene (H1) folgende zweite Hierarchieebene (H2) Diagnoseparameter (D1,D2,D3) enthält, die Zustandsgrößen (M) definieren, die unmittelbar auf die Stör-Zustandsgröße (MS) einwirken,
• eine auf die Hierarchieebene Hn folgende Hierarchieebene Hn+1 Diagnoseparameter (D21,D22,D23) enthält, die Zustandsgrößen (M) definieren, die unmittelbar auf die Zustandsgrößen (M) einwirken, die durch die Diagnoseparameter (D1,D2,D3) der Hierarchieebene Hn charakterisiert werden;
• ausgehend vom Stör-Diagnoseparameter (DS) ein Fehlerweg (F) im Abhängigkeitsbaum (A) dadurch ermittelt wird, daß entsprechend der Größe oder einer Veränderungsrichtung (V) eines Diagnoseparameters (D) einer Hierarchieebene Hn ein verantwortlicher Diagnoseparameter (DV) einer Hierarchieebene Hn+1 identifiziert wird;
• aus einem so identifizierten verantwortlichen Diagnoseparameter (DV) einer letzten Hierarchieebene (H) auf die Ursache des Störereignisses geschlossen wird.

2. Diagnoseverfahren nach Anspruch 1,
bei dem jedem Diagnoseparameter (D) einer Hierarchieebene Hn+1 für jeden Diagnoseparameter (D) einer Hierarchieebene Hn eine steigende, fallende oder konstant bleibende Änderungsrichtung (VZ) abhängig von einer vorgegebenen Änderungsrichtung (V) des jeweiligen Diagnoseparameters (D) der Hierarchieebene Hn zugewiesen wird, wobei der Fehlerweg (F) anhand einer Übereinstimmung gemessener Änderungsrichtungen (VM) der Diagnoseparameter (D) mit den zugewiesenen Änderungsrichtungen (V) ermittelt wird.

3. Diagnoseverfahren nach Anspruch 1 oder 2,
bei dem die technische Anlage (1) eine Turbinenanlage ist.

4. Diagnoseverfahren nach Anspruch 3,
bei dem die Turbinenanlage (1) eine Gasturbinenanlage (1A) ist.

5. Diagnoseverfahren nach Anspruch 3,
bei dem die Turbinenanlage (1) eine Dampfturbinenanlage (1B) ist.

6. Diagnoseverfahren nach Anspruch 3,
bei dem die Turbinenanlage (1) eine kombinierte Gas- und Dampfturbinenanlage ist.

7. Diagnoseverfahren nach einem der vorhergehenden Ansprüche, bei dem die Ursachenermittlung durch Nutzung eines Wide-Area-Network (40), insbesondere dem Internet, erfolgt.

8. Diagnosesystem (38) für eine technische Anlage (1) bei dem eine Ursache eines durch eine Stör-Zustandsgröße (MS) beschriebenen Störereignisses durch folgende Schritte ermittelbar ist:
• Ermittlung eines über Zustandsgrößen (11) definierten Betriebszustandes der Anlage (1) durch eine Bestimmung von jeweils eine Zustandsgröße (M) charakterisierender Diagnoseparametern (D);
• Erstellung eines aus Hierarchieebenen (H), numeriert mit Hn, aufgebauten Abhängigkeitsbaumes (A), der zumindest einen Teil der Diagnoseparameter (D) enthält, wobei
• eine erste Hierarchieebene (H1) einen die Stör-Zustandsgröße (MS) charakterisierenden Stör-Diagnoseparameter (DS) enthält,
• eine auf die erste Hierarchieebene folgende zweite Hierarchieebene (H2) Diagnoseparameter (D1, D2, D3) enthält, die Zustandsgrößen (M) definieren, die unmittelbar auf die Stör-Zustandsgröße (MS) einwirken,
• eine auf die Hierarchieebene Hn folgende Hierarchieebene Hn+1 Diagnoseparameter (D21, D22, D23) enthält, die Zustandsgrößen (M) definieren, die unmittelbar auf die Zustandsgrößen (M) einwirken, die durch die Diagnoseparameter (D1, D2, D3) der Hierarchieebene Hn charakterisiert werden;
• Ermittlung eines Fehlerweges im Abhängigkeitsbaum (A) ausgehend vom Stör-Diagnoseparameter (DS) dadurch, daß entsprechend der Größe oder einer Veränderungsrichtung (V) eines Diagnoseparameters (D) einer Hierarchieebene Hn ein verantwortlicher Diagnoseparameter (DV) einer Hierarchieebene Hn+1 identifiziert wird;
• Bestimmung der Ursache aus einem so identifizierten verantwortlichen Diagnoseparameter (DV) einer letzten Hierarchieebene (H).

## Claims

1. Diagnostic method for a technical installation (1) for determining the cause of a fault event described by a fault state variable (MS), in which
• an operating state of the installation, defined via state variables (M), is established by determining diagnostic parameters (D) that each characterize a state variable (M);
• a dependency tree (A) built up from hierarchical levels (H) numbered Hn is compiled, which contains at least some of the diagnostic parameters (D),
• a first hierarchical level (H1) containing a fault diagnostic parameter (DS) that characterizes the fault state variable (MS),
• a second hierarchical level (H2), following the first hierarchical level (H1), containing diagnostic parameters (D1, D2, D3) which define state variables (M) that act directly on the fault state variables (MS)
• a hierarchical level Hn+1, following the hierarchical level Hn, containing diagnostic parameters (D21, D22, D23) which define state variables (M) that act directly on the state variables (M) which are **characterized by** the diagnostic parameters (D1, D2, D3) at the hierarchical level Hn;
• starting from the fault diagnostic parameter (DS), a fault path (F) in the dependency tree (A) is determined in that, depending on the magnitude or a change direction (V) of a diagnostic parameter (D) at a hierarchical level Hn, a responsible diagnostic parameter (DV) at a hierarchical level Hn+1 is identified;
• the cause of the fault is inferred from a responsible diagnostic parameter (DV) identified
• in this way at a last hierarchical level (H).

2. Diagnostic method according to Claim 1, in which for each diagnostic parameter (D) at a hierarchical level Hn, a rising, falling or constant change direction (VZ) is allocated to each diagnostic parameter (D) at a hierarchical level Hn+1 as a function of a predefined change direction (V) of the respective diagnostic parameter (D) at the hierarchical level Hn, the fault path (F) being established using agreement between measured change directions (VM) of the diagnostic parameters (D) and the allocated change directions (V).

3. Diagnostic method according to Claim 1 or 2, in which the technical installation (1) is a turbine installation.

4. Diagnostic method according to Claim 3, in which the turbine installation (1) is a gas turbine installation (1A).

5. Diagnostic method according to Claim 3, in which the turbine installation (1) is a steam turbine installation (1B).

6. Diagnostic method according to Claim 3, in which the turbine installation (1) is a combined gas and steam turbine installation.

7. Diagnostic method according to one of the preceding claims, in which the cause is established by utilizing a wide area network (40), in particular the Internet.

8. Diagnostic system (38) for a technical installation (1) in which a cause of a fault event described by a fault state variable (MS) can be determined by the following steps:
• establishing an operating state of the installation (1), defined via state variables (11), by determining diagnostic parameters (D) that each characterize a state variable (M);
• compiling a dependency tree (A), built up from hierarchical levels (H) numbered Hn, which contains at least some of the diagnostic parameters (D),
• a first hierarchical level (H1) containing a fault diagnostic parameter (DS) that characterizes the fault state variable (MS),
• a second hierarchical level (H2), following the first hierarchical level, containing diagnostic parameters (D1, D2, D3) which define state variables (M) that act directly on the fault state variable (MS),
• a hierarchical level Hn+1, following the hierarchical level Hn, containing diagnostic parameters (D21, D22, D23) which define state variables (M) which act directly on the state variables (M) which are **characterized by** the diagnostic parameters (D1, D2, D3) at the hierarchical level Hn;

## Revendications

1. Procédé de diagnostic pour une installation technique (1) pour la détermination de la cause d'un événement anormal décrit par une grandeur d'état de perturbation (MS), dans lequel
• on détermine un état de fonctionnement, défini par l'intermédiaire de grandeurs d'état (M), de l'installation par une détermination de paramètres de diagnostic (D) caractérisant à chaque fois une grandeur d'état (M) ;
• on construit un arbre de dépendance (A) qui est structuré à partir de niveaux hiérarchiques (H) Hn et qui contient au moins une partie des paramètres de diagnostic (D), dans lequel
• un premier niveau hiérarchique (H1) contient un paramètre de diagnostic de perturbation (DS) caractérisant la grandeur d'état de perturbation (MS),
• un deuxième niveau hiérarchique (H2) faisant suite au premier niveau hiérarchique (H1) contient des paramètres de diagnostic (D1, D2, D3) qui définissent des grandeurs d'état (M) qui agissent directement sur la grandeur d'état de perturbation (MS),
• un niveau hiérarchique Hn + 1 faisant suite au niveau hiérarchique Hn contient des paramètres de diagnostic (D21, D22, D23) qui définissent des grandeurs d'état (M) qui agissent directement sur les grandeurs d'état (M) **caractérisées par** les paramètres de diagnostic (D1, D2, D3) du niveau hiérarchique Hn ;
• à partir du paramètre de diagnostic de perturbation (DS), on détermine un trajet d'erreur (F) dans l'arbre de dépendance (A) en identifiant, selon la grandeur ou un sens de variation (V) d'un paramètre de diagnostic (D) d'un niveau hiérarchique Hn, un paramètre de diagnostic responsable (DV) d'un niveau hiérarchique Hn + 1 ;
• à partir d'un paramètre de diagnostic responsable (DV) ainsi identifié d'un dernier niveau hiérarchique (H), on déduit la cause de l'événement anormal.

2. Procédé de diagnostic selon la revendication 1, dans lequel on attribue à chaque paramètre de diagnostic (D) d'un niveau hiérarchique Hn + 1 pour chaque paramètre de diagnostic (D) d'un niveau hiérarchique Hn un sens de variation (VZ), croissant, décroissant ou constant, en fonction d'un sens de variation prédéterminé (V) du paramètre de diagnostic respectif (D) du niveau hiérarchique Hn, le trajet d'erreur (F) étant déterminé à l'aide d'une coïncidence entre les sens de variation mesurés (VM) des paramètres de diagnostic (D) et les sens de variation attribués (V).

3. Procédé de diagnostic selon la revendication 1 ou 2, dans lequel l'installation technique (1) est une installation de turbines.

4. Procédé de diagnostic selon la revendication 3, dans lequel l'installation de turbines (1) est une installation de turbines à gaz (1A).

5. Procédé de diagnostic selon la revendication 3, dans lequel l'installation de turbines (1) est une installation de turbines à vapeur (1B).

6. Procédé de diagnostic selon la revendication 3, dans lequel l'installation de turbines (1) est une installation combinée de turbines à gaz et à vapeur.

7. Procédé de diagnostic selon l'une des revendications précédentes, dans lequel la détermination de cause s'effectue en exploitant un réseau Wide Area Network (40), notamment le réseau Internet.

8. Système de diagnostic (38) pour une installation technique (1), dans lequel une cause d'un événement anormal décrit par une grandeur d'état de perturbation (MS) peut être déterminée par les étapes suivantes :
• détermination d'un état de fonctionnement, défini par l'interrnédiaire de grandeurs d'état (11), de l'installation (1) par une détermination de paramètres de diagnostic (D) caractérisant à chaque fois une grandeur d'état (M) ;
• création d'un arbre de dépendance (A) qui est structuré à partir de niveaux hiérarchiques (H) Hn et qui contient au moins une partie des paramètres de diagnostic (D), dans lequel
• un premier niveau hiérarchique (H1) contient un paramètre de diagnostic de perturbation (DS) caractérisant la grandeur d'état de perturbation (MS),
• un deuxième niveau hiérarchique (H2) faisant suite au premier niveau hiérarchique contient des paramètres de diagnostic (D1, D2, D3) qui définissent des grandeurs d'état (M) qui agissent directement sur la grandeur d'état de perturbation (MS),
• un niveau hiérarchique Hn + 1 faisant suite au niveau hiérarchique Hn contient des paramètres de diagnostic (D21, D22, D23) qui définissent des grandeurs d'état (M) qui agissent directement sur les grandeurs d'état (M) **caractérisées par** les paramètres de diagnostic (D1, D2, D3) du niveau hiérarchique Hn ;
• détermination d'un trajet d'erreur dans l'arbre de dépendance (A) à partir du paramètre de diagnostic de perturbation (DS) en identifiant, en fonction de la grandeur ou d'un sens de variation (V) d'un paramètre de diagnostic (D) d'un niveau hiérarchique Hn, un paramètre de diagnostic responsable (DV) d'un niveau hiérarchique Hn + 1 ;
• détermination de la cause à partir d'un paramètre de diagnostic responsable (DV) ainsi identifié d'un dernier niveau hiérarchique (H).
